# EUROPEAN PATENT APPLICATION

(11) **EP 3 491 939 A1**
(43) Date of publication of application: **05.06.2019**
(21) Application number: 17834089.9
(22) Date of filing: 18.07.2017
(51) Int. Cl.: A23N 12/08, A23F 5/04

(54) **GREEN COFFEE BEAN INFORMATION PROVISION METHOD AND TERMINAL FOR ACQUIRING INFORMATION ON GREEN COFFEE BEANS**

(30) Priority: 29.07.2016 JP 2016149550
(71) Applicant: Panasonic Intellectual Property Management Co., Ltd., Osaka-shi, Osaka 540-6207 (JP)
(72) Inventor: SUZUKI Kumiko, Osaka 540-6207 (JP); MIZUNO Haruhiko, Osaka 540-6207 (JP); FUJITA Toshihiro, Osaka 540-6207 (JP); YAMAMOTO Masahiro, Osaka 540-6207 (JP); SADAKATA Hideki, Osaka 540-6207 (JP); NAKANO Makoto, Osaka 540-6207 (JP); II Tatsuya, Osaka 540-6207 (JP)
(74) Representative: SSM Sandmair
(86) International application number: PCT/JP2017/025860
(87) International publication number: WO 2018/021081

(57) **Abstract**

Provided is an information provision method of raw coffee beans using a database that holds information on a plurality of kinds of raw coffee beans, and the database includes at least identification information of each raw coffee bean, control information indicating a roasting method of each raw coffee bean by a roasting machine, and attribute information associating accompanying information related to production of each raw coffee bean with each other. The information provision method causes user terminal (200) to read an information code into which one of identification information of a given raw coffee bean and address information of database server (100) storing attribute information of the given raw coffee bean is converted, and to extract the identification information or address information. In addition, when terminal (200) transmits a request of attribute information of a given raw coffee bean based on the identification information or address information, the attribute information of the given raw coffee bean is extracted from database server (100) and transmitted to terminal (200). Further, terminal (200) transmits control information included in the attribute information to roasting machine (300) and causes an output device to output accompanying information.

## Description

### TECHNICAL FIELD

The present invention relates to a raw coffee bean information provision method and a terminal for acquiring information on raw coffee beans in a distribution system of raw coffee beans.

### BACKGROUND ART

Roasting machines are manufactured and sold as devices for roasting raw coffee beans. The roasting machine adjusts a roasting state of raw coffee beans by adjusting a temperature of a roasting chamber (roasting temperature). The roasting temperature is determined depending on kinds of raw coffee beans by a technician called a roaster who has an advanced roasting technique. The roaster proposes various temperature change data.

As a roasting machine for business use, there is a roasting machine that acquires ideal change data of a roasting temperature from a server and presents work data according to the change data to a user (for example, refer to Patent Literature 1). The user checks the work data presented on a display of the roasting machine and can learn a heating amount and an air blowing amount to be set. Therefore, the user can perform roasting by adjusting an actual roasting temperature of raw coffee beans so as to follow an ideal temperature change.

### Citation List

### Patent Literature

PTL 1: Unexamined Japanese Patent Publication No. 2009-268428

### SUMMARY OF THE INVENTION

However, for example, with a roasting machine used in an ordinary home, it is very difficult for a user to set a heating amount and an air blowing amount while referring to the work data. Thus, it is necessary to perform roasting by setting the heating amount and air blowing amount plural times by trial and error, and the raw coffee beans are wasted.

In addition, it is not easy for a general user to know which change data of roasting temperature is suitable for raw coffee beans purchased by oneself. Further, even if the heating amount and air blowing amount can be set, it is not easy to know whether it is suitable roasting.

On the other hand, if a roasting machine merely performs roasting full-automatically, it is difficult for a user to get an actual feeling of performing roasting by oneself. If such an actual feeling can be gotten, it seems to be able to enjoy coffee more deeply.

Non-limiting, exemplary embodiment of the present invention provides technique for improving user's convenience in acquisition of control information of a roasting machine according to kinds of raw coffee beans and improving a feeling of satisfaction of a user through a work of roasting the raw coffee beans.

The information provision method of raw coffee beans according to the exemplary embodiment of the present invention is a method for providing information on plural kinds of raw coffee beans by using a database that holds the information, the database including attribute information, the attribute information including, in association with each other, at least (i) identification information uniquely identifying each of the plural kinds of raw coffee beans, (ii) control information indicating a roasting method of the kind by a roasting machine possessed by a user, and (iii) accompanying information related to production of the kinds, the information provision method including the steps of: causing a terminal of the user to read an information code into which one of identification information of a given kind among the plural kinds of raw coffee beans and address information of a server storing attribute information of the given kind is converted; extracting the identification information of the given kinds or the address information from the information code; causing the terminal to transmit a request of the attribute information of the given kinds based on the identification information of the given kinds or the address information extracted; extracting the attribute information of the given kinds from the database in response to reception of the request; transmitting, to the terminal, the attribute information extracted; causing the terminal to receive the attribute information transmitted; causing a roasting machine to transmit the control information included in the attribute information; and causing an output device of the terminal to output the accompanying information.

Further, the device according to the exemplary embodiment of the present invention is a terminal that acquires information on plural kinds of raw coffee beans by using a database that holds the information, the database holding attribute information including in association with each other, at least (i) identification information uniquely identifying each of the plural kinds of raw coffee beans, (ii) control information indicating a roasting method of the kind by a roasting machine possessed by a user, and (iii) accompanying information related to production and roasting of the kind, and reading of information from the database being managed by a server, the terminal including: a reading device that reads optically, magnetically, or by a wireless communication, an information code into which one of identification information of a given kind among the plural kind of raw coffee beans and address information of a server storing attribute information of the given kind is converted, the information code being assigned to a delivered kind of raw coffee beans; a processing circuit that generates a request of the attribute information of the given kind based on the information code read; a communication circuit that transmits the request to the server, receives the attribute information of the given kind from the server, and transmits the control information included in the attribute information to a roasting machine; and an output device that outputs the accompanying information.

According to the exemplary information provision method of the present invention, user's convenience in acquisition of control information of a roasting machine according to kinds of raw coffee beans is improved. Further, optimal roasting can be performed from the first time, and waste of raw coffee beans does not occur. In addition, a feeling of satisfaction of a user through a work of roasting the raw coffee beans is improved.

### BRIEF DESCRIPTION OF DRAWINGS

FIG. 1 is an explanatory diagram showing an exemplary distribution system of raw coffee beans of the present invention.
FIG. 2 is an explanatory diagram showing an information provision system about raw coffee beans that can be included in the exemplary distribution system of the present invention.
FIG. 3 is a hardware configuration diagram of a DB server operated by a raw coffee bean provider in the exemplary raw coffee bean distribution system of the present invention.
FIG. 4 is a hardware configuration diagram of a user terminal and a roasting machine constituting the exemplary raw coffee bean distribution system of the present invention.
FIG. 5 is an external view of the roasting machine constituting the exemplary raw coffee bean distribution system of the present invention.
FIG. 6 is a sectional view showing a configuration inside the roasting machine constituting the exemplary raw coffee bean distribution system of the present invention.
FIG. 7 is a flowchart showing a procedure of creating an attribute information table by the DB server operated by the raw coffee bean provider in the exemplary raw coffee bean distribution system of the present invention.
FIG. 8 is a waveform diagram showing an example of a roasting profile constituting the exemplary raw coffee bean distribution system of the present invention.
FIG. 9 is a waveform diagram showing an example of the roasting profile constituting the exemplary raw coffee bean distribution system of the present invention.
FIG. 10 is a flowchart showing communications performed between respective devices of a terminal, a shipping server, and the DB server constituting the exemplary raw coffee bean distribution system of the present invention and a processing procedure of each device.
FIG. 11 is a front view of the user terminal constituting the exemplary green bean distribution system of the present invention in which an application program is displayed on a display.
FIG. 12 is a front view of the user terminal constituting the exemplary raw coffee bean distribution system of the present invention in which an information code read by a camera module is displayed on the display.
FIG. 13 is a front view of the user terminal constituting the exemplary raw coffee bean distribution system of the present invention in which a button displayed for notifying an article name of a raw coffee bean and downloading attribute information of the raw coffee bean is displayed on the display.
FIG. 14 is a front view of the user terminal constituting the exemplary raw coffee bean distribution system of the present invention in which a button showing completion of downloading of the attribute information of the raw coffee bean is displayed on the display.
FIG. 15 is a flowchart showing communications performed between the roasting machine and the user terminal constituting the exemplary raw coffee bean distribution system and a processing procedure of each of the roasting machine and the user terminal.
FIG. 16 is a front view of the user terminal constituting the exemplary raw coffee bean distribution system of the present invention in which a display inquiring whether to update the attribute information is displayed on the display.
FIG. 17 is an explanatory diagram showing an example of a data structure of a storage of the user terminal constituting the exemplary raw coffee bean distribution system of the present invention.
FIG. 18 is a front view of the user terminal constituting the exemplary raw coffee bean distribution system of the present invention in which information on the bean is displayed on the display.
FIG. 19 is a front view of the user terminal constituting the exemplary raw coffee bean distribution system of the present invention in which detailed information on the bean is displayed on the display.
FIG. 20 is a perspective view of a raw coffee bean packaging container constituting the exemplary raw coffee bean distribution system of the present invention.

### DESCRIPTION OF EMBODIMENT

Hereinafter, with reference to accompanying drawings, a terminal that acquires information on plural kinds of raw coffee beans by using a database holding the information, and a roasting machine that roasts raw coffe beans based on the information received from the terminal will be described. In the following, raw coffee beans are simply described as " raw beans".

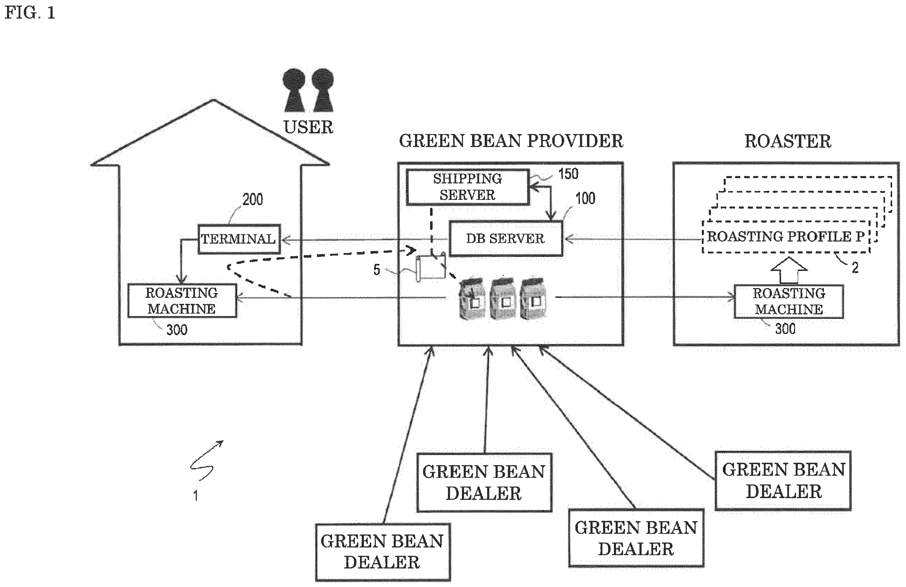

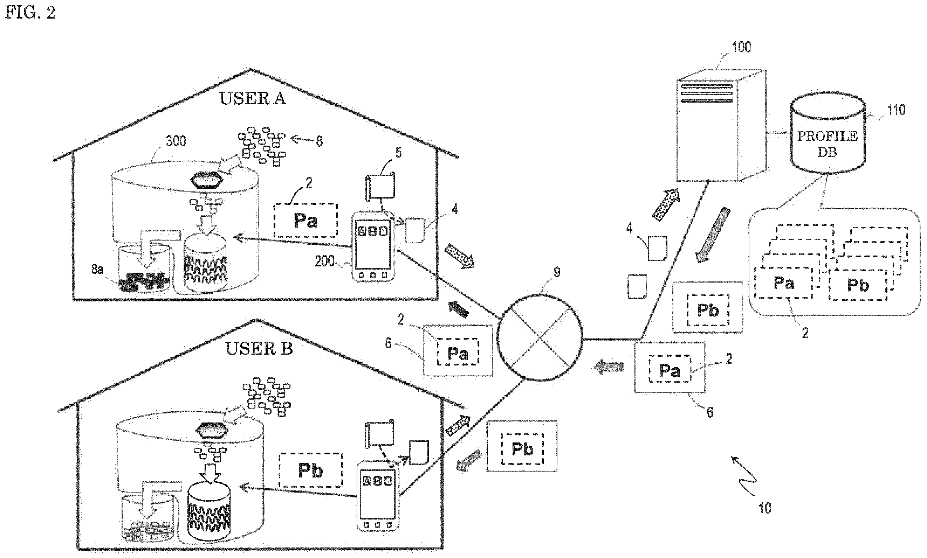

FIG. 1 shows exemplary raw coffee bean distribution system 1 of the present invention. FIG. 2 shows information provision system 10 about raw coffee beans that can be included in distribution system 1.

Distribution system 1 is a scheme for distributing raw beans in which raw coffee bean dealers, a raw coffee bean provider, a roaster, and raw coffee bean purchasers are involved. In this description, a system that provides information on raw coffee beans is also incorporated into a part of distribution system 1. Various devices are included in distribution system 1 for exchanging information. Examples of the devices include database (DB) server 100 (hereinafter, referred to as DB server 100) and shipping server 150 operated by the raw coffee bean provider, terminal 200 possessed by a user, and roasting machines 300 respectively used by the user and the roaster.

The raw coffee bean dealer is a producer (company or individual) that operates a farm for producing coffee beans.

The raw coffee bean provider is a company or individual that performs business of providing a user with raw beans purchased from the raw coffee bean dealer. The raw coffee bean provider may be a person who purchases raw beans from another domestic or foreign raw coffee bean dealer and sells them, or a person who directly imports raw beans from outside the country
The raw coffee bean provider requests a roaster excellent in technique of roasting to prepare roasting profile 2 before selling the purchased raw beans to a user. Roasting profile 2 is control information for controlling roasting machine 300 possessed by a user. Roasting profile 2 includes, for example, a temperature profile showing a relation between a roasting time and a roasting temperature in roasting machine 300, and a rotation number profile showing a relation between the roasting time and a rotation number per unit time of a fan motor of roasting machine 300. Typically, a roaster and a user use roasting machines 300 having the same performance, respectively. The roaster uses roasting machine 300 to determine a pair of a temperature profile and a rotation number profile that the roaster thinks appropriate for roasting the raw beans.

The raw coffee bean provider receives roasting profile 2 from the roaster, accumulates roasting profile 2 in a storage device of DB server 100, and manages this roasting profile 2 by DB server 100. Note that, roasting profile 2 may be prepared for each of a plurality of kinds of raw beans, and may be prepared in plurality also for the same kind of raw beans.

The raw coffee bean provider prepares for shipment of raw beans to a user. Shipping server 150 of the raw coffee bean provider converts identification information capable of uniquely specifying the raw coffee bean among the plurality of kinds of raw beans to generate information code 5. For example, the identification information is an article number and information code 5 may be a QR code (registered trademark, the same applies hereinafter). A technique of generating a QR code from character information is publicly known and therefore its detailed description will be omitted.

Note that description will be given such that information code 5 and identification information of the kind are different in this description, but being different is not indispensable. For example, the identification information may be directly handled as information code 5.

When shipping server 150 generates information code 5, the raw coffee bean provider attaches information code 5 to a packaging container of raw beans to be shipped. For example, the raw coffee bean provider affixes a label describing information code 5 to the packaging container. Alternatively, the raw coffee bean provider prints information code 5 onto the packaging container. After that, the raw coffee bean provider encapsulates the raw beans in the packaging container and sends the raw beans to a user.

Next, refer to FIG. 2. In FIG. 2, user A and user B, who are different from each other, are shown. To avoid overlapping of description, only user A will be described in the following, but the same description may be applied also to user B.

FIG. 2 shows a processing flow in which terminal 200 of user A acquires attribute information of raw beans based on identification information 4 of the kind of raw beans extracted from information code 5 attached to the raw coffee bean packaging container in information provision system 10.

The user reads information code 5 of the received raw coffee bean packaging container by using possessed terminal 200. For example, terminal 200 is a smartphone with a camera. The user photographs (reads) information code 5 with the camera of terminal 200 and has a function of extracting identification information 4 from read information code 5. For example, a signal processing circuit (signal processing processor or CPU) of terminal 200 executes an application program to extract identification information 4 from read information code 5. Alternatively, a dedicated processing circuit (DSP) of terminal 200 extracts identification information 4 from the read information code.

Terminal 200 transmits acquired identification information 4 to DB server 100 of the raw coffee bean provider through communication network 9 and requests transmission of attribute information 6 of the kind. Communication network 9 is, for example, the Internet.

Attribute information 6 includes one or more of roasting profiles 2 of the raw coffee beans. DB server 100 transmits attribute information 6 of the raw coffee beans preliminarily stored together with roasting profile 2 to user terminal 200 through communication network 9. Terminal 200 receives attribute information 6.

User terminal 200 extracts roasting profile 2 from acquired attribute information 6 and transmits roasting profile 2 to roasting machine 300 possessed by the user. Roasting machine 300 receives roasting profile 2 and sets roasting profile 2 as control information before starting roasting operation. Thus, roasting machine 300 performs roasting with the same condition as that when the roaster roasted the raw beans. Upon completion of roasting, the user can acquire beans 8a roasted according to roasting profile 2 and enjoy coffee by grinding the beans.

Since in the roasting work, temperature control, air blowing control, and time management need to be appropriately performed separately and independently for each raw bean, time and effort are required for performing roasting satisfactory for common people. For example, regarding the temperature control, if the temperature is different by 1 °C at an initial stage just after the start of roasting, flavor of coffee after the roasting is said to change largely.

In the present exemplary embodiment, a roasting profile decided by the roaster is prepared and the roasting profile is set to roasting machine 300 from terminal 200 possessed by the user. This makes it possible to perform roasting readily and appropriately and to improve user's feeling of satisfaction through the work of roasting the raw beans.

In addition, as described below, attribute information 6 includes various kinds of information in addition to roasting profile 2. Examples of the various kinds of information include accompanying information on raw beans which is information on a production place, a producer, and a roaster of the raw beans (specifically, agrochemical certificate, export and import matters (business operator, date), and packaging date (production date) are included), access information for connecting to a server, and priority information indicating a roasting profile especially recommended by the roaster when a plurality of roasting profiles are included. The user can refer to these pieces of information by using terminal 200. This allows the user to know the raw beans deeply and enjoy coffee more deeply.

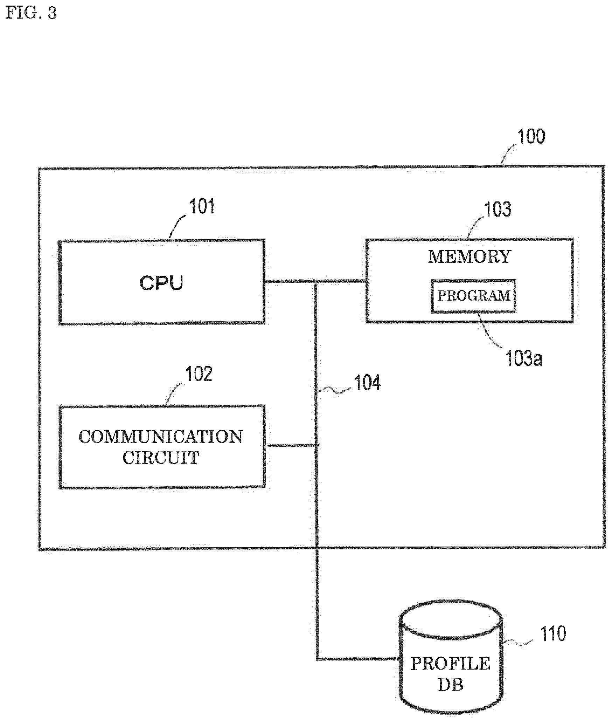

Hereinafter, with reference to FIG. 3 to FIG. 6, hardware structures of DB server 100, terminal 200, and roasting machine 300 will be described. Note that, description of a hardware configuration of shipping server 150 is omitted. This is because the hardware configuration of shipping server 150 is equivalent to that of DB server 100 except a database. With such a hardware configuration, shipping server 150 may perform operation described herein. However, shipping server 150 may be omitted by DB server 100 performing the above operation of shipping server 150.

FIG. 3 is a hardware configuration diagram of DB server 100 operated by a raw coffee bean provider. DB server 100 is a computer system including signal processing circuit (hereinafter, called "CPU") 101, communication circuit 102, and memory 103. CPU 101, communication circuit 102, and memory 103 are connected to communication bus 104 and can mutually transmit and receive data. Communication circuit 102 performs wired communication conforming, for example, to an Ethernet (registered trademark, the same applies hereinafter) standard.

In memory 103, computer program 103a read from a nonvolatile memory (not shown) is read and developed. Examples of computer program 103a include a program for constructing a profile database (DB), a management program of a profile DB, and a later-described processing program for executing predetermined processing by communicating with shipping server 150 and terminal 200. CPU 101 performs communication and processing described below by executing these computer programs.

In addition, to DB server 100, profile database (DB) 110 (hereinafter, described as profile DB 110) is connected. Profile DB 110 is also connected to bus 104 via a not-shown communication interface, and retrieval, update, or the like of profile DB 110 can be performed by CPU 101 or the like. Note that profile DB 110 may be provided in DB server 100.

The detail of operations of DB server 100 will be described below.

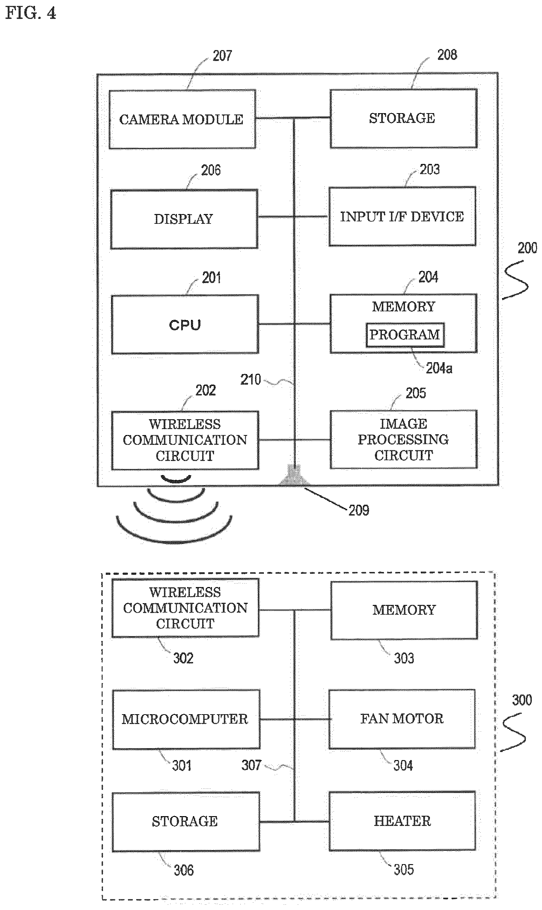

FIG. 4 is hardware configuration diagrams of user terminal 200 and roasting machine 300.

Terminal 200 is a computer system including signal processing circuit (hereinafter, described as "CPU") 201, wireless communication circuit 202, input interface (I/F) device 203, memory 204, image processing circuit 205, display 207, camera module 207, storage 208, and speaker 209. For example, terminal 200 is a smartphone or a tablet-type computer. The above constituent elements of terminal 200 are connected to communication bus 210 and can mutually transmit and receive data.

In the present exemplary embodiment, communication circuit 202 is assumed to be able to perform communications of a plurality of communication standards. For example, wireless communication circuit 202 can perform communication by a communication system (for example, CDMA communication) provided by a telecom company, communication of a Wi-Fi (registered trademark, the same applies hereinafter) standard, and communication of a Bluetooth (registered trademark, the same applies hereinafter) standard. As one example, the former two can be used for communication with DB server 100. The communication of the Bluetooth standard can be used for communication with roasting machine 300.

Input I/F device 203 is a device for a user to input instructions to terminal 200. In the present exemplary embodiment, input I/F device 203 is assumed to be a touch screen panel provided overlapping display 206. However, the touch screen panel is one example of input I/F device 203. Input I/F device 203 may be a physical button. Alternatively, input I/F device 203 may be configured by a microphone and a voice recognition circuit. Input I/F device 203 recognizes user's voice and inputs an instruction to terminal 200.

In memory 204, computer program 204a read from a nonvolatile memory (not shown) is developed. Computer program 204a is provided, for example, by a raw coffee bean provider, and a processing procedure that the raw coffee bean provider desires to cause terminal 200 to execute is described therein. For example, computer program 204a, by instructions of CPU 201, causes camera module 207 to start and photograph an information code and causes CPU 201 to extract identification information of raw beans from the information code. Then, computer program 204a causes CPU 201 to communicate with DB server 100, receive attribute information of raw beans from DB server 100, and display characters and images on display 206. At this time, image processing circuit 205 is sometimes caused to perform processing for display. In addition, computer program 204a causes CPU 201 to store the received attribute information in storage 208.

Image processing circuit 205 is a circuit that performs calculation for displaying characters, figures, and the like on display 206.

Display 206 is one example of an output device. Display 206 is, for example, a liquid crystal display panel or an organic EL panel and displays characters and/or images based on a calculation result of image processing circuit 205.

Camera module 207 is one example of a so-called imaging device. Camera module 207 includes, for example, one or plural lenses, an actuator that moves the lenses in an optical axis direction, and an imaging element. In the present exemplary embodiment, camera module 207 is used for reading a QR code.

Storage 208 is, for example, a nonvolatile flash memory and stores attribute information or the like of the raw beans acquired by terminal 200.

Speaker 209 is one example of an output device. In the present exemplary embodiment, speaker 209 outputs explanation of raw beans by voice. This explanation is an explanation about a production place, a producer, and a roaster of raw beans and preliminarily prepared as accompanying information.

The detail of operations of terminal 200 will be described below.

Roasting machine 300 includes microcontroller (hereinafter, described as a microcomputer) 301, wireless communication circuit 302, memory 303, fan motor 304, and heater 305. The above constituent elements of roasting machine 300 are connected to communication bus 307 and can mutually transmit and receive data.

In the present exemplary embodiment, communication circuit 302 is assumed to be able to perform communication of a Bluetooth standard. Wireless communication circuit 302 can perform communication of this standard with wireless communication circuit 202 of terminal 200.

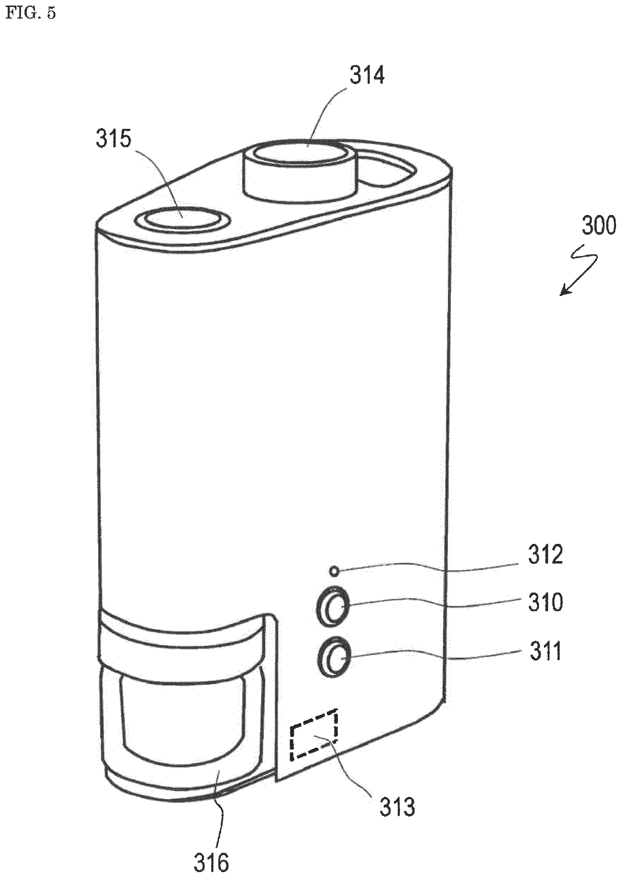

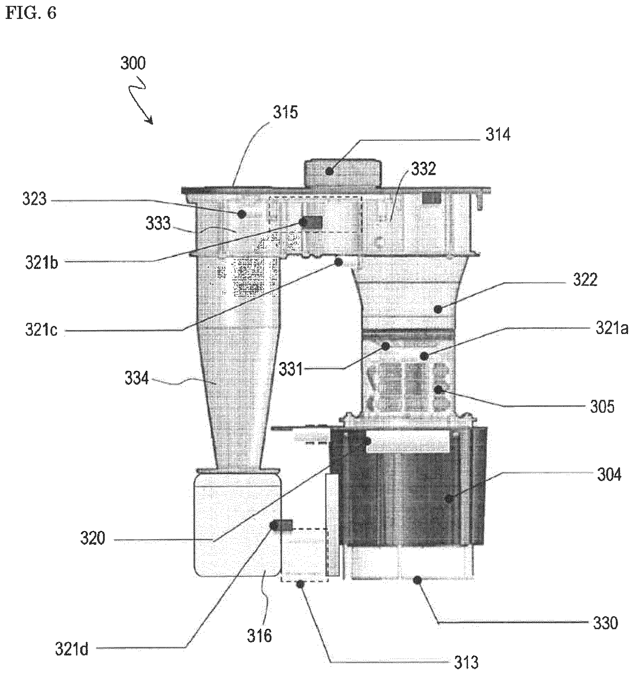

Note that, the configuration of roasting machine 300 shown in FIG. 4 merely shows mainly constituent elements controlled by microcomputer 301. The detail of structure of roasting machine 300 will be described later with reference to FIG. 5 and FIG. 6.

Microcomputer 301 communicates with terminal 200 via wireless communication circuit 302, receives roasting profile 2 from terminal 200, temporarily stores roasting profile 2 in memory 303, and accumulates roasting profile 2 in storage 306. Microcomputer 301 controls a rotation speed (rotation number per unit time, hereinafter, abbreviated as "rotation number") of fan motor 304 at the time of roasting operation using roasting profile 2 and further controls a temperature of heater 305.

Microcomputer 301 in FIG. 4 preliminarily stores a computer program in an EEPROM (not shown) inside microcomputer 301 so as to preliminarily perform a predetermined operation. Microcomputer 301 uses internal buffer and register to execute the computer program. Note that, as in the examples of DB server 100 and terminal 200, also in roasting machine 300, microcomputer 301 may execute a computer program developed in memory 303

FIG. 5 is an external view of roasting machine 300. FIG. 6 is a sectional view showing an internal configuration of roasting machine 300. Roasting machine 300 is a hot-air type roasting machine that roasts raw beans by hot heated air.

Roasting machine 300 includes roasting start/stop switch 310, bean discharging switch 311, state display LED 312, electronic circuit board 313, raw coffee bean throw-in cup 314, exhaust port 315, and container 316. Roasting machine 300 may be provided with a switch (not shown) that switches on/off a main power supply.

Roasting start/stop switch 310 is pressed down by a user in order to start preheating. Alternatively, roasting start/stop switch 310 is pressed down by a user in order to stop heating during roasting. Note that, according to the above operation, roasting start/stop switch 310 may be expressed as a preheating start/roasting stop switch, but is expressed as the roasting start/stop switch because the preheating is grasped also as a part of the roasting.

Bean discharging switch 311 is pressed down by a user in order to discharge beans after roasting to container 316. State display LED 312 lights up, for example, in raw coffee during a period from supply of power to roasting machine 300 until roasting machine 300 receives roasting profile 2 and flashes, for example, in red after reception of roasting profile 2. In addition, state display LED 312 lights up, for example, in red during preheating and flashes, for example, in orange during roasting.

Various electronic circuits are mounted on electronic circuit board 313. For example, on electronic circuit board 313, microcomputer 301, wireless communication circuit 302, memory 303, storage 306 and communication bus 307, which are shown in FIG. 4, are provided.

Raw coffee bean throw-in cup 314 is a space having an opening for a user to throw-in raw beans and is communicated with a roasting pot (described below) inside roasting machine 300. Exhaust port 315 is an opening of an internal duct for exhausting hot air during roasting. Container 316 receives the discharged beans when bean discharging switch 311 is pressed down by a user after roasting.

With reference to FIG. 6, the internal configuration of roasting machine 300 will be described while describing operations from start to end of roasting. Note that, predetermined roasting profile 2 is assumed to be set to roasting machine 300 prior to the start of roasting. The user sets a specified amount of raw beans into raw coffee bean throw-in cup 314. Then, when the user presses down roasting start/stop switch 310 in a state in which the main power supply is turned on, roasting machine 300 starts preheating of roasting pot 322 and heats roasting pot 322 to a predetermined temperature after a predetermined preheating time.

Upon completion of preheating, roasting machine 300 displays completion of preheating on state display LED 312 and display 206. The user checks the display and opens raw coffee bean throw-in cup 314 to drop the raw beans into roasting pot 322. At this time, raw coffee bean throw-in cup detecting sensor 312c detects throw-in of raw beans. Further, when the user closes raw coffee bean throw-in cup 314, a roasting process is started. Microcomputer 301 operates an AC-DC converter mounted on power supply board 320 to rotate fan motor 304 and starts heating by heater 305. By rotation of fan motor 304, air is sucked from inlet port 330 at a main body lower surface of roasting machine 300 and heated by heater 305. The heated hot air is sent into roasting pot 322 with a strong air volume through hot air discharge port 331. The hot air causes heat convection to occur in roasting pot 322. The raw beans are agitated in roasting pot 322 by the heat convection, and thereby the roasting progresses uniformly.

A part of the hot air of roasting pot 322 is exhausted from roasting pot 322 and discharged from exhaust port 315 through internal passages 332 and 333. At this time, the air volume is measured by air volume sensor 321b. The air volume is proportional to a rotation speed of fan motor 304. Microcomputer 301 can determine whether fan motor 304 is normally rotating based on an output value of air volume sensor 321b.

Temperature sensor 312a is provided near heater 305. In addition, temperature sensor 323 is provided also between internal passage 333 and exhaust port 315. Temperature sensor 312a detects a temperature of heater 305 and temperature sensor 323 detects a temperature of exhaust heat. Microcomputer 301 can determine whether heater 305 is normally operating based on an output value of at least any of temperature sensors 312a and 323.

Roasting machine 300 is provided with container detecting sensor 321d that detects whether container 316 exists. For example, container detecting sensor 321d outputs a high-level voltage signal when container 316 exists and outputs a low-level voltage signal when container 316 does not exist.

When the roasting ends, microcomputer 301 stops heater 305. When the user presses down bean discharging switch 311, microcomputer 301 discharges the roasted beans only when the output value of container detecting sensor 321d is at a high level. Microcomputer 301 rotates fan motor 304 at high speed to blow off the beans by the force of wind, and thus the beans are discharged. The beans are discharged into container 316 through internal passages 332 and 323 and further through internal passage 334. Note that, both at the start of roasting and during roasting, the condition that the output value of container detecting sensor 321d must be at a high level may be imposed.

Each of raw coffee bean throw-in cup detecting sensor 312c and air volume sensor 321b is not an essential constituent element and may be omitted.

Roasting machine 300 roasts raw beans at a temperature and an air volume indicated by roasting profile 2. In the following, processing related to attribute information including roasting profile 2 according to the present exemplary embodiment will be described.

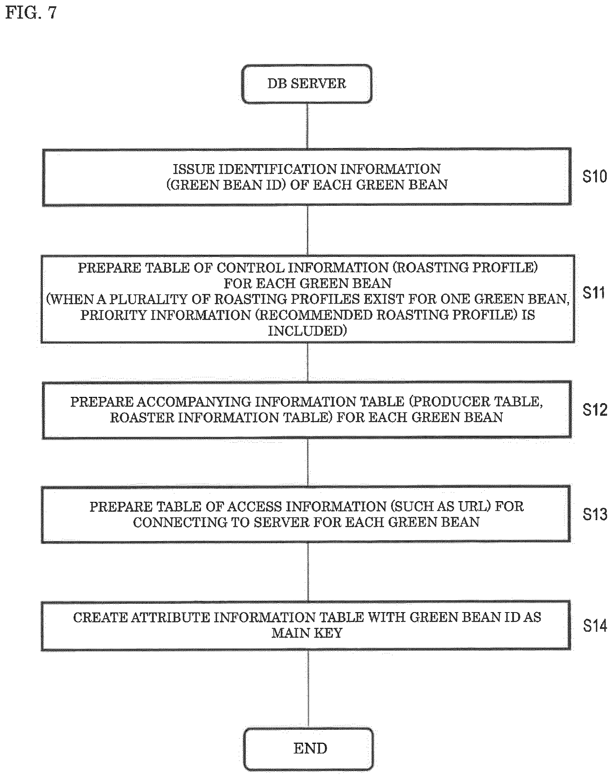

FIG. 7 shows a procedure of creating an attribute information table by DB server 100. The attribute information table is a database in which a plurality of tables are associated with each other by a certain key (main key).

In the present exemplary embodiment, the main key is associated by a "raw coffee bean code". The "raw coffee bean code" is identification information that can uniquely specify a raw bean. Separate codes are assigned to the raw coffee bean codes when a variety, a production place, or the like is different. Further, separate codes are assigned to the raw coffee bean codes when harvest times are different even if the variety, production place, production farm, and the like are completely matched.

First, in step S10, CPU 101 of DB server 100 issues a raw coffee bean code for each raw bean handled by the raw coffee bean provider. CPU 101 issues a different raw coffee bean code when the production country, production place, farm, producer, or harvest time of the raw bean is different.

The subsequent processing from step S11 to step S13 is a process in which CPU 101 prepares various tables input by the raw coffee bean provider for generating attribute information.

In step S11, CPU 101 prepares a control information table for each raw bean. The control information table stores information (control information) indicating a roasting profile. When a plurality of roasting profiles exist for one raw bean, the control information table includes priority information indicating a recommended roasting profile. The control information table may further include a comment of the roaster who decided the roasting profile and information on a roasting time by each roasting profile. Table 1 described below shows a table of control information in which control information and priority information for each of a plurality of raw beans are written.

**[Table 1]**

| PROFILE ID | PROFILE No | PROFILE No | PROFILE No | PRIORITY | COMMENT OF ROASTER |
|---|---|---|---|---|---|
| 16061 | 16061A | 16061B | 16061C | 16061B | ---- |
| 16062 | 16062A | 16062B | 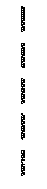 | 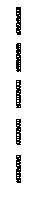 | 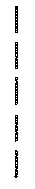 |
| 16063 | 16063A | 16063B | | | |
| ¦ | ¦ | ¦ | | | |

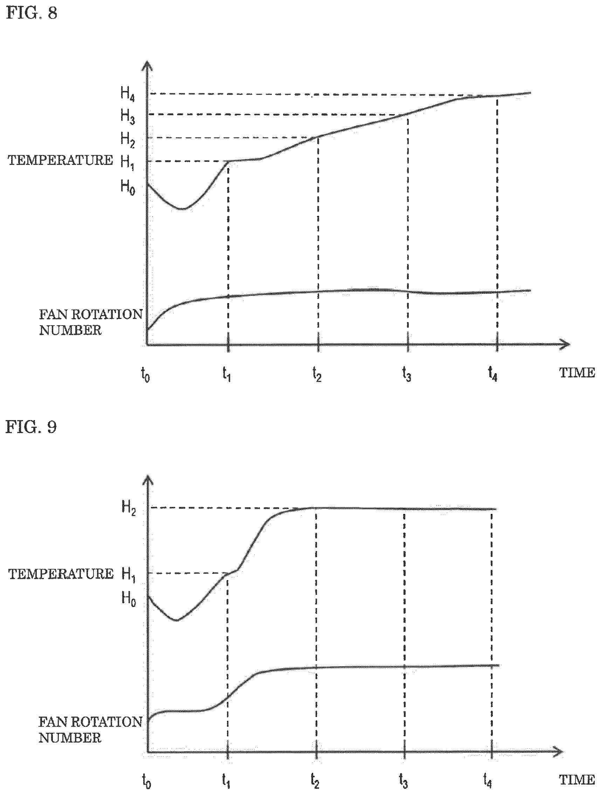

FIG. 8 and FIG. 9 show examples of different roasting profiles 2 (FIG. 1, FIG. 2). Horizontal axis shows a roasting time t and vertical axis shows a roasting temperature and a rotation number of fan motor 304. The roasting profile is control information indicating a roasting method of each raw bean by roasting machine 300. The roasting profile includes a temperature profile showing a relation between a roasting time and a roasting temperature in roasting machine 300, and a rotation number profile showing a relation between the roasting time and a rotation number of fan motor 304.

The temperature changes of the two roasting profiles shown in FIG. 8 and FIG. 9 are the same until a time t1 but are different after the time t1. In addition, it is understood that the rotation numbers of fan motors 304 are different from an initial time t0.

The reason why each condition of the temperature and air volume at the time of roasting are different like this is that for example, characteristics of the raw bean and target degrees of roasting are different. The "characteristics of the raw bean" include a size, a water content, various carbohydrates, an acid, a lipid, an amino acid, a protein, a caffeine, a chlorogenic acid, and the like of the individual raw bean. The "degrees of roasting" include "light roast", "medium roast", and "dark roast".

In the present exemplary embodiment, in the control information table, for each raw coffee bean, at least three roasting profiles having different degrees of roasting, that is, three roasting profiles for light roast, medium roast, and dark roast are stored.

Note that, the degrees of roasting can be further subdivided, in order from the light roast toward the dark roast, such as light roast, cinnamon roast, medium roast, high roast, city roast, full city roast, Italian roast, and French roast.

Roasting machine 300 controls a temperature and a rotation number of fan motor 304 so as to conform to the roasting profiles shown in FIG. 8 and FIG. 9. Microcomputer 301 controls the temperature by adjusting an input to heater 305 based on the output value of at least any of temperature sensors 312a and 323.

Note that, waveforms shown in FIG. 8 and FIG. 9 are shown by continuous functions for convenience of understanding. However, actually, the roasting profile can be prepared as a data row in which the temperature and rotation number are shown for each lapsed time based on the roasting start time. The "profile No" shown in Table 1 can be a pointer to a file name of a data file in which a data row of the roasting profile is stored or a pointer to the data file.

In step S12, CPU 101 prepares an accompanying information table for each raw bean. The accompanying information includes at least one of the production country, production place, producer, and cultivation environment of each raw bean, a name of the roaster who is a preparer of the control information, and information on the comment of the roaster. The accompanying information need not be gathered in one table. For example, Table 2 shows an example of a producer table, and Table 3 shows an example of a roaster information table.

**[Table 2]**

| PRODUCER CODE | COUNTRY NAME | PRODUCTION PLACE | FARM NAME | PRODUCER NAME | CULTIVATION ENVIRONMENT |
|---|---|---|---|---|---|
| 10 | BR | SÃO PAULO | ---- | ---- | ---- |
| 11 | BR | SÃO PAULO | 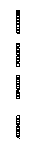 | 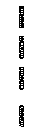 | 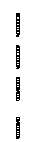 |
| 12 | BR | MINAS GERAIS | ¦ | ¦ | ¦ |
| ---- | ---- | ---- | ¦ | ¦ | ¦ |
| 25 | CO | ---- | ¦ | ¦ | ¦ |
| ---- | ---- | ---- | \| | \| | \| |
| 70 | VN | ---- | | | |

In the producer table of Table 2, the production country, production place, a farm name, a producer name, and the cultivation environment of the raw bean are described, and those are associated with a producer code uniquely given to the producer.

**[Table 3]**

| ROASTER CODE | NAME | AFFILIATION |
|---|---|---|
| 101 | ---- | ---- |
| 102 | ---- | ---- |

In the roaster table of Table 3, a name and an affiliation of the roaster are described, and those are associated with a roaster code uniquely given to the roaster.

In next step S13, CPU 101 prepares, for each raw bean, a table of access information (such as URL) for connection to a server. Table 4 shows an example of an access information table.

**[Table 4]**

| ACCESS CODE | ACCESS INFORMATION |
|---|---|
| 100A001A | HTTPS:// ----- |
| 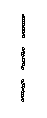 | 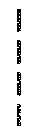 |
| 100AC02U | ¦ |
| 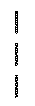 | 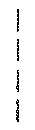 |
| 100AD00B | ¦ |
| 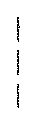 | \| |

In the access information table of Table 4, as the access information, for example, an address (URL) that specifies DB server 100 on communication network 9 is described. The access information can be a URL of a community site operated on DB server 100, for example, in order for a user to post a review document about the purchased raw beans and to read a review posted by another user.

In step S14, CPU 101 creates an attribute information table with the raw bean code as a main key. Table 5 shows an example of the attribute information table.

**[Table 5]**

| RAW COFFEE BEAN CODE | PRODUCT NAME | COUNTRY NAME | PRODUCTION PLACE | FARM NAME | PRODUCER NAME | CULTIVATION ENVIRONMENT | ROASTING PROFILE | PRIORITY | ACCESS INFORMATION |
|---|---|---|---|---|---|---|---|---|---|
| BDC-0001 | BRAZIL PARAISO | BRAZIL | MINASGERAIS STATE | P FARM | A. YYY | ---- | 16061A | 16061 B | HTTPS://A.--- |
| | | | | | | | 16061B | | |
| | | | | | | | 16061C | | |
| BDC-0002 | COLOMBIA CUP OF EXCELLENCE | COLOMBIA | NARIÑO STATE | Q FARM | R. XXX | ---- | 16062A | 16062 A | HTTPS://B.--- |
| | | | | | | | 16062B | | |
| BDC-0003 | BRAZIL Q GRADE | BRAZIL | SÃOPAULO STATE | R FARM | C. ZZZ | --- | 16063A | 16063 B | HTTPS://C.--- |
| | | | | | | | 16063B | | |
| | | | | | | | 16063C | | |

By the above processing, DB server 100 creates the attribute information table.

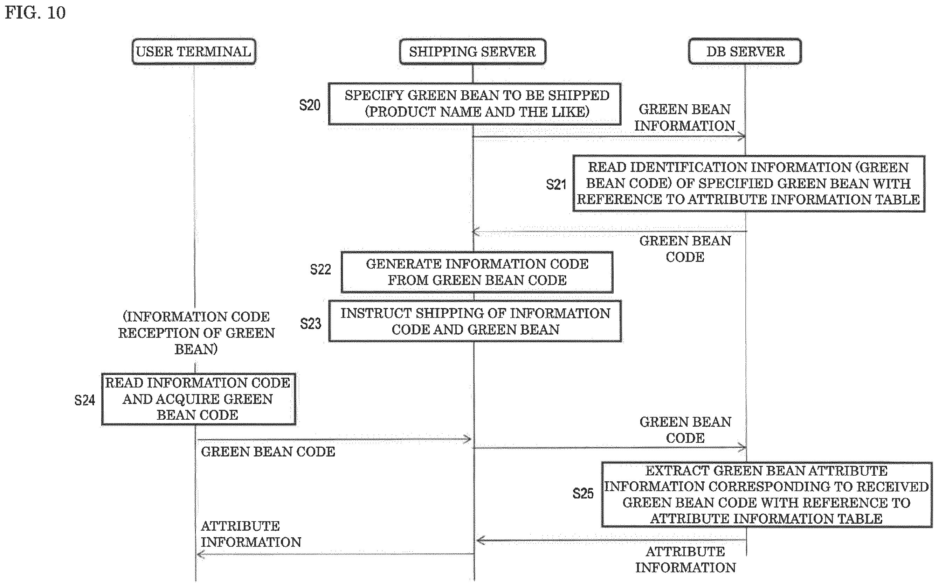

Next, with reference to FIG. 10 to FIG. 14, processing performed in distribution system 1 (refer to FIG. 1) and information provision system 10 (refer to FIG. 2) will be described. FIG. 10 shows processing from shipping of a raw bean until a user having received the raw bean acquires the attribute information of the raw bean.

FIG. 10 shows communications performed among respective devices of terminal 200, shipping server 150, and DB server 100 and a processing procedure of each device. Arrows in the horizontal direction of the figure indicate communications performed by terminal 200, shipping server 150, and DB server 100. On the other hand, a direction from up to down in the figure indicates a direction in which time elapses and shows an order of the processing of each device.

In step S20, shipping server 150 specifies, for each user, a raw bean to be shipped to the user, for example, by a product name. Shipping server 150 sends a product name of the specified raw bean to DB server 100 and requests transmission of identification information (raw coffee bean code) of the raw bean.

In step S21, CPU 101 of DB server 100 receives the product name of the raw bean from shipping server 150 and further receives a transmission request of the raw coffee bean code. CPU 101 refers to the attribute information table (Table 5) and reads a raw coffee bean code corresponding to the received product name of the raw bean. CPU 101 transmits the raw coffee bean code to shipping server 150.

In step S22, shipping server 150 receives the raw coffee bean code and generates an information code from the raw coffee bean code.

In step S23, shipping server 150 attaches the information code to a packaging container of the raw bean and instructs, for example, an automated shipping system (not shown) to ship the raw bean. Thereby, the raw bean is encapsulated and the packaging container attached with the information code is shipped to a user as a package.

The user receives the package of the raw bean shipped by the raw coffee bean provider.

In step S24, CPU 201 of terminal 200 reads the information code attached to the packaging container with terminal 200 to acquire the raw coffee bean code.

Here, an operation example of terminal 200 by a user will be described. It is assumed that the user has installed an application program provided from the raw coffee bean provider in terminal 200. The user having received the raw bean executes the application program. The application program may request a user who uses the application program for the first time to input login information (for example, login ID and password).

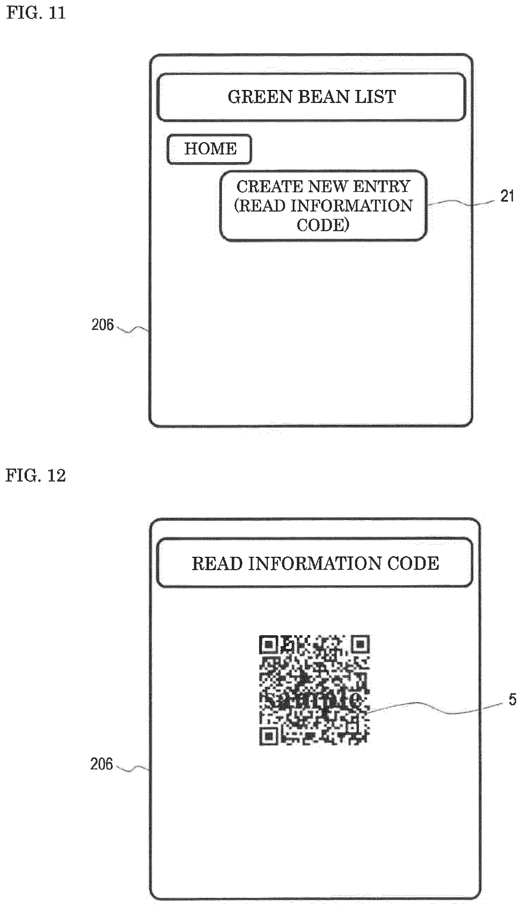

FIG. 11 shows an example of information that the application program displays on display 206 of user terminal 200. Display 206 displays button 21 that the user can operate. Button 21 is a button for preparing an item related to the raw bean delivered for the first time. The user touches displayed button 21 of display 206. Then, input I/F device 203 recognizes an input position and transmits the input position to CPU 201. CPU 201 recognizes the selection of button 21 and executes read processing of the information code.

FIG. 12 shows an example of information code 5 that is read by camera module 207 and displayed on display 206. In the shown example, information code 5 is a QR code. CPU 201 extracts the identification information (raw coffee bean code) of the raw bean from the QR code by publicly known processing. However, the raw coffee bean code cannot be said to be useful information for the user in many cases. Therefore, the information code may include a product name of the raw bean in addition to the raw coffee bean code, and the product name may be displayed on display 206 and notified to the user.

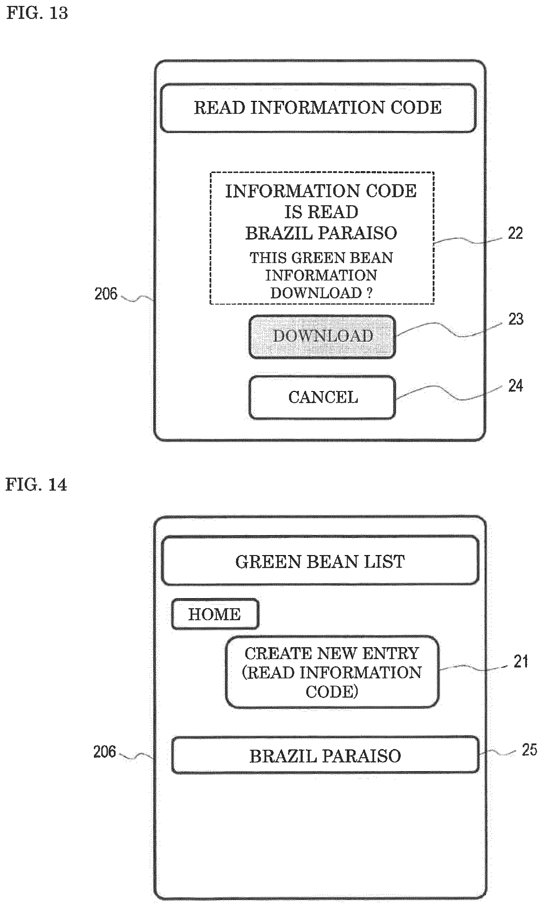

FIG. 13 shows notification 22 of an article name displayed on display 206 and button 23 displayed for downloading the attribute information of the raw bean. The user can learn that the product name of the raw bean is "Brazil Paraiso" by notification 22. Then, if the user desires to download information of the raw bean, the user touches button 23 to select "download". On the other hand, if download is not required, the user touches cancel button 24.

Note that the information indicated by the information code need not be the raw coffee bean code. Another example is address information (for example, URL) of DB server 100 storing the attribute information of the raw bean. CPU 201 converts the information code into the address information, and thereby wireless communication circuit 202 of terminal 200 can access DB server 100 according to this address information.

CPU 201 executes the processing of downloading the attribute information of the raw bean by a user's operation. Specifically, CPU 201 transmits the raw bean code to DB server 100 and requests transmission of the attribute information of the raw bean. Alternatively, CPU 201 accesses DB server 100 by using the address information acquired from the information code and requests transmission of the attribute information of the raw bean.

In step S25 of FIG. 10, CPU 101 of DB server 100 refers to the attribute information table (Table 5) and extracts the attribute information of the raw bean corresponding to the received raw bean code. CPU 101 transmits the extracted attribute information to terminal 200 that has requested transmission of the attribute information. Terminal 200 receives the attribute information and stores the attribute information in storage 208.

In the present exemplary embodiment, the attribute information stored in storage 208 includes three roasting profiles for light roast, medium roast, and dark roast. This enables a user to collectively store the roasting profiles having different degrees of roasting in storage 208, thus improving user's convenience.

With the above processing, user terminal 200 acquires the attribute information of the delivered raw bean.

FIG. 14 shows button 25 displayed on display 206 after download of the attribute information of the raw bean is completed. As described below, by touching button 25, it is possible for the user to check the production place and the like of the raw bean based on the attribute information and to transmit the roasting profile for roasting the raw bean to roasting machine 300.

Next, roasting profile transmission processing from terminal 200 to roasting machine 300 will be described.

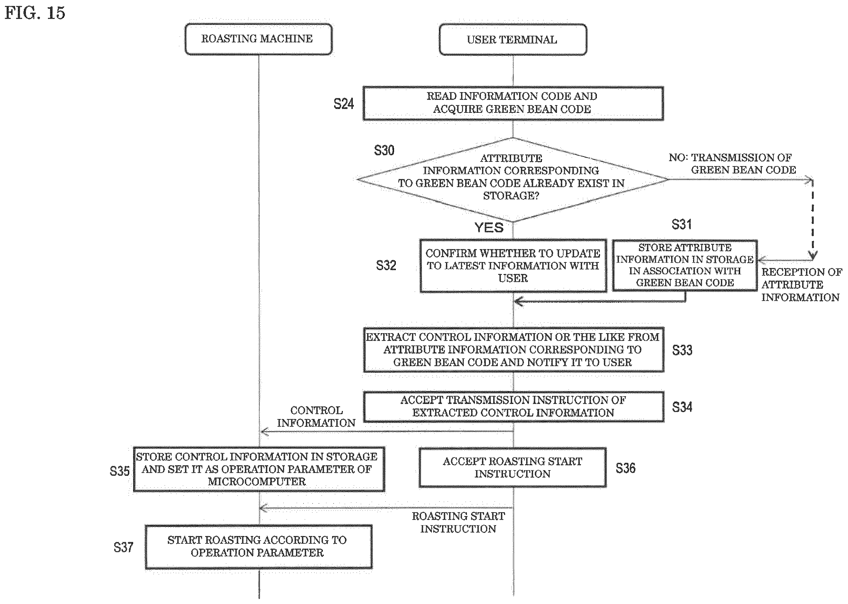

FIG. 15 shows communications performed between the roasting machine and the user terminal and a processing procedure of each of the roasting machine and the user terminal. Note that, FIG. 15 also shows an example of processing when the attribute information corresponding to the raw coffee bean code is already saved after the information code is read.

In step S24, CPU 201 of terminal 200 reads the information code attached to the packaging container with terminal 200 to acquire the raw coffee bean code. Note that, step S24 is the same as step S24 in FIG. 10.

In step S30, CPU 201 determines whether the attribute information corresponding to the raw coffee bean code exists in storage 208. For example, CPU 201 determines whether the attribute information having the same raw coffee bean code as the acquired raw coffee bean code exists. The product name can be also used in place of the raw coffee bean code.

If the attribute information having the same raw coffee bean code as the acquired raw coffee bean code does not exist, the same processing as in FIG. 10 may be performed to receive the attribute information. Then, in step S31, CPU 201 stores the attribute information in storage 208 in association with the raw coffee bean code.

On the other hand, when the attribute information having the same raw coffee bean code as the acquired raw coffee bean code exists, the processing proceeds to step S32.

In step S32, CPU 201 confirms whether to update the attribute information to the latest one with the user.

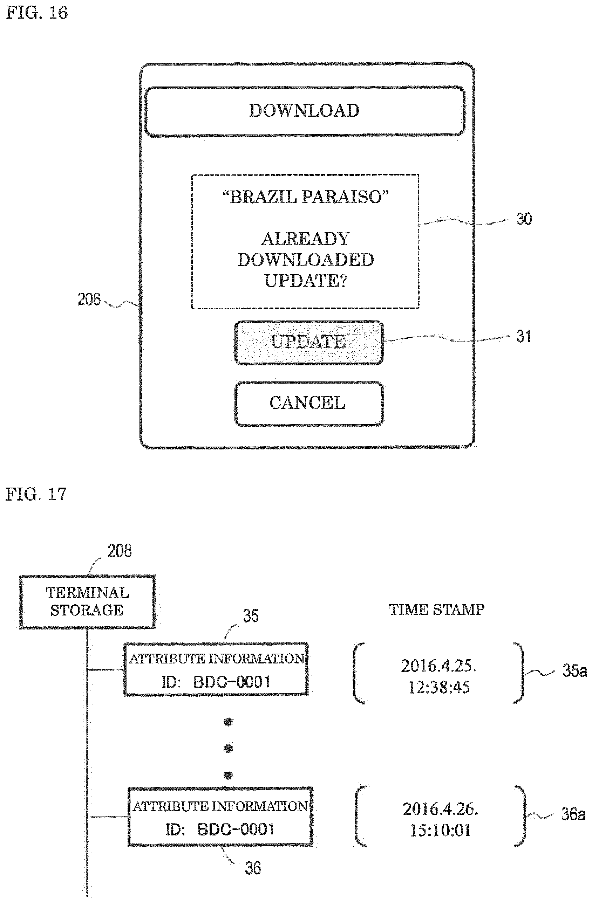

FIG. 16 shows an example of display 30 that is displayed on display 206 of user terminal 200 and inquires whether to update the attribute information. Display 30 includes an article name and a description showing that the download is already completed. The user touches button 31 when the user desires to update the attribute information to the latest one. CPU 201 transmits the raw coffee bean code to DB server 100 and performs the processing of step S31.

FIG. 17 shows one example of a data structure of storage 208 of user terminal 200. Attribute information 35 and 36 of "BDC-0001" as an ID corresponding to the raw coffee bean code coexist. However, time stamp 35a when attribute information 35 is obtained and time stamp 36a when attribute information 36 is obtained are different from each other, and attribute information 36 is newer. In the present exemplary embodiment, that the attribute information is updated is used only in the meaning of acquiring the latest attribute information. Rewriting of the attribute information is not performed, and the attribute information is managed as a separate data file having the different time stamp. Note that, the time stamp may be a time when the attribute information is received by terminal 200 or a time when the attribute information is written into storage 208. Terminal 200 may rewrite an original data file when the attribute information is updated.

The processing after step S33 in FIG. 15 relates to processing of transmitting control information to roasting machine 300.

In step S33, CPU 201 of terminal 200 extracts control information (roasting profile), priority information, and the like from the attribute information corresponding to the raw coffee bean code and displays a notification for prompting a user to select a roasting method.

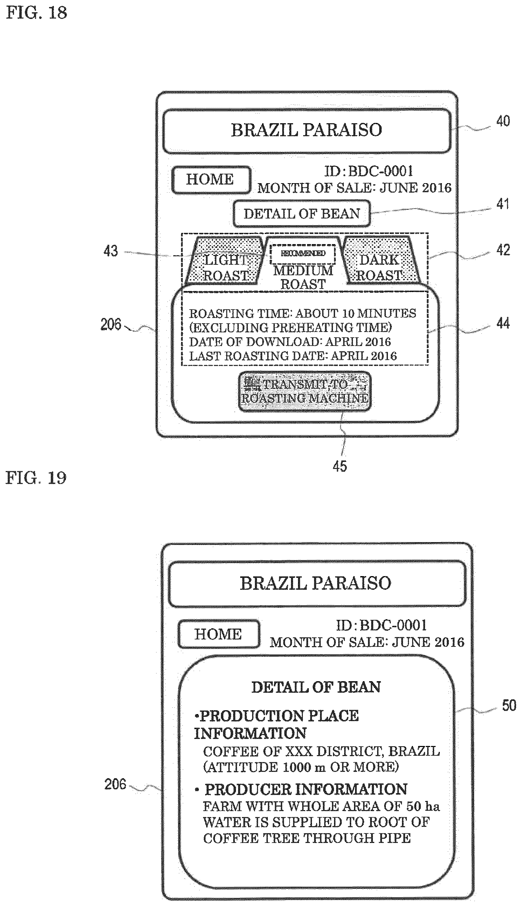

FIG. 18 shows a notification example displayed on display 206 of user terminal 200. Display 206 shows notification 40 related to an article name of a kind of raw bean and button 41 for displaying the detail of the kind. When the user touches button 41, CPU 201 extracts the production place, farm name, producer name, cultivation environment, and the like from the attribute information and displays them. FIG. 19 shows a description 50 that is the detail of the bean displayed on display 206. The configuration may be adopted in which although not shown in FIG. 19, latitude and longitude information is made to be included in the information of production place, a world map not shown in FIG. 19 is displayed on display 206, and the production place is plotted on the world map of display 206 displayed based on the latitude and longitude information of the production place, and thereby a position of the production place is visually appealed.

In addition, as shown in FIG. 18, display 206 displays notification 42 indicating a plurality of roasting methods, notification 43 indicating that it is a roasting method that the roaster recommends, and notification 44 that is the detail of the currently selected roasting method.

In the present exemplary embodiment, notification 42 indicating a plurality of roasting methods allows a user to select the degree of roasting. The user can select three degrees of roasting of light roast, medium roast, and dark roast.

When the user touches a tab of another roasting method displayed in notification 42, CPU 201 switches notification 44 to the description corresponding to the roasting method. The user can decide which roasting method is to be selected with reference to notification 43. Note that, notification 43 is specified by the priority (Table 5) of attribute information. The user, after deciding a favorite roasting method, touches transmission button 45.

Refer back to FIG. 15.

In step S34, CPU 201 accepts the touch to transmission button 45 as a transmission instruction of the control information corresponding to the selected roasting method. CPU 201 transmits the control information (roasting profile) corresponding to the selected roasting method to roasting machine 300.

Note that, CPU 201 preferably transmits only the control information (roasting profile) corresponding to the selected roasting method to roasting machine 300. For example, only the roasting profile for medium roast corresponding to the medium roast that is the degree of roasting selected in FIG. 18 from among three roasting profiles for light roast, medium roast, and dark roast stored in storage 208 is transmitted to roasting machine 300. This can reduce the capacity of memory 303 or storage 306, thus providing roasting machine 300 at low cost.

In step S35, microcomputer 301 of roasting machine 300 receives the control information and stores the control information in storage 306. Further, microcomputer 301 sets the received control information as an operation parameter of microcomputer 301. Microcomputer 301 preliminarily holds a table, a function, or a program for determining a current value to be fed to fan motor 304 and heater 305 according to the operation parameter. Microcomputer 301, when the operation parameter is set, can roast raw beans according to the operation parameter.

In step S37, microcomputer 301 of roasting machine 300 starts roasting according to the set operation parameter.

In the above exemplary embodiment, an aspect of roasting raw beans, but this is one example. The above description can be applied also to a roasting machine that roasts, for example, nuts such as almond and walnut, or tea leaf, and a terminal that transmits control information to the roasting machine.

In addition, in the above exemplary embodiment, it is described that information code 5 can be a QR code, but it may be a barcode (JAN code). Further, in the exemplary embodiment, it is described that information code 5 is photographed with the camera of terminal 200 and optically read, but another aspect can be adopted. For example, information code 5 may be recorded on a magnetic tape or the like, and terminal 200 may magnetically read information code 5 by using a magnetic head. Alternatively, information code 5 may be recorded in a storage device (for example, flash memory) of a wireless communication tag, and terminal 200 may read information code 5 by wireless communication.

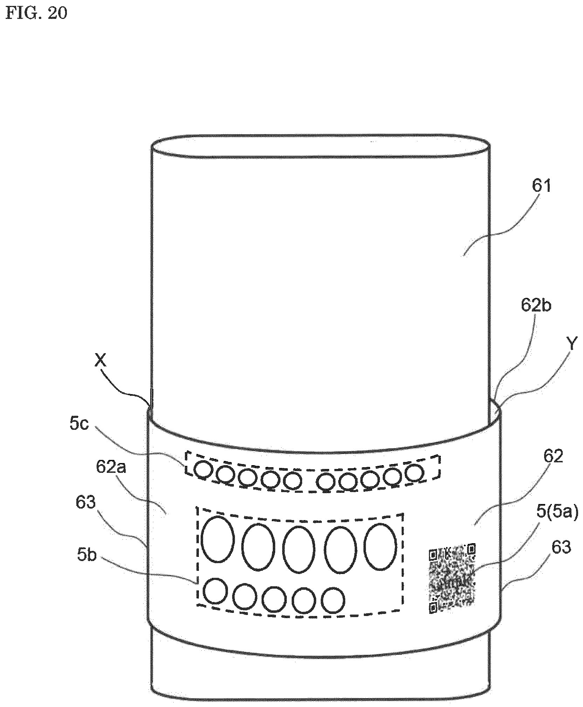

Next, the packaging container of raw beans to be shipped to a user by a raw coffee bean provider and the label to be attached to the packaging container, which are mentioned in FIG. 1, will be described with reference to FIG. 20. As shown in FIG. 20, cylindrical label 62 displaying QR code 5a that is information code 5 is attached to packaging container 61 that houses raw beans so as to entirely surround the outer periphery of packaging container 61. Label 62 is formed so that its inner periphery is larger than the outer periphery of packaging container 61 and includes label front surface 62a displaying QR code 5a and label rear surface 62b opposing label front surface 62a. On label front surface 62a, in addition to QR code 5a that is information code 5, the kind of raw bean, production place information and the like are described together with the relatively large characters, and raw bean information 5b positioned at almost the same height as that of QR code 5a of label front surface 62a is displayed. Further, above QR code 5a and raw coffee bean information 5b, raw coffee bean simple information 5c in which the kind of raw bean and the like are described with small characters in comparison with the large characters of raw coffee bean information 5b is displayed. When QR code 5a is read with a terminal (not shown), such as a smartphone or a tablet-type computer, there is a case where raw coffee bean information 5b positioned at almost the same height as that of QR code 5a is not visible from a user because raw coffee bean information 5b is hidden by the terminal that is brought close to QR code 5a. When raw coffee bean simple information 5c is not displayed, in order to check whether the information on the raw beans displayed on a display of the terminal is information on the raw beans housed in packaging container 61, the user, after memorizing or writing, as a memo, the information on the kind of raw beans displayed on the display of the terminal, must compare the information with information on the kind of raw beans which is obtained by moving the terminal so that raw coffee bean information 5b becomes visible and memorizing the information as raw coffee bean information 5b or writing the information as a memo. Since raw coffee bean simple information 5c is displayed above QR code 5a and raw coffee bean information 5b, raw coffee bean simple information 5c is not hidden by the terminal even if the terminal is brought close to QR code 5a, and therefore the user can compare the information on the kind of raw beans displayed on the display of the terminal with raw coffee bean simple information 5c without moving the terminal. Thus, acquisition work of the roasting profile can be performed easily and unmistakably.

Label 62 is bonded and fixed to packaging container 61, but label 62 is bonded and fixed to packaging container 61, for example, at a part of label rear surface 62b and label front surface 62a is not bonded and fixed to packaging container 61. FIG. 20 shows a part where label rear surface 62b is bonded and fixed to packaging container 61 as bonded part A. Label 62 is apart from packaging container 61 except at bonded part X and gap Y is formed.

In addition, at a boundary line between label front surface 62a and label rear surface 62b, two perforations 63 formed from the upper end to the lower end of label 62 are provided, and label front surface 62a and label rear surface 62b can be separated by cutting two perforations 63. Moreover, since label front surface 62a is not bonded and fixed to packaging container 61, label front surface 62a can be separated also from packaging container 61. Furthermore, an inner periphery surface (not shown) of label front surface 62a has a configuration in which an adhesive applied to almost whole surface is covered with a separation sheet, and it is possible to peel off the separation sheet and attach label front surface 62a to various portions according to user's preference. For example, label front surface 62a is attached to a container of glass or the like that houses raw beans taken out from packaging container 61 and is used as a label of the container, which makes it possible to save a lot of work of writing information on raw beans housed in the container and to prevent description errors of the raw coffee bean information. In addition, the display of QR code 5a allows acquisition of the roasting profile suitable for the raw beans housed in the container many times without errors.

Additionally, to containers of glass or the like housing a plurality of kinds of raw beans respectively, respective label front surfaces 62a separated from the respective raw coffee bean housing containers are attached and the containers are arranged, and thus the containers each having a label of a unified design are arranged as a result, which can give a user satisfaction as an excellent interior.

Further, as a way of using label front surface 62a that can be separated from housing container 61 and can be easily attached to the container, there is also a way of enjoying to attach label front surface 62a to a large world map according to the production place of raw beans. The user, while viewing label front surface 62a attached to the world map, can spend a comfortable time while checking which region or country produced the coffee the user has tasted or considering a region where favorite coffee is distributed.

As described above, the first invention is directed to a method of providing information on plural kinds of raw coffee beans by using a database that holds the information. The database includes attribute information. The attribute information includes, in association each other, at least (i) identification information uniquely identifying each of the plural kinds of raw coffee beans, (ii) control information indicating a roasting method of the kind by a roasting machine possessed by a user, and (iii) accompanying information related to production of the kind. The method of providing raw coffee bean information includes a step of causing a user terminal to read an information code into which one of identification information of a given kind among the plural kinds of raw coffee beans and address information of a server storing attribute information of the given kind is converted and a step of extracting the identification information of the given kind or the address information from the information code. In addition, the method includes a step of causing the terminal to transmit a request of the attribute information of the given kind based on the identification information of the given kind or the address information extracted and a step of extracting the attribute information of the given kind from the database in response to reception of the request. Further, the method includes a step of transmitting, to the terminal, the attribute information extracted, a step of causing the terminal to receive the attribute information transmitted, a step of causing a roasting machine to transmit the control information included in the attribute information, and a step of causing an output device of the terminal to output the accompanying information.

The second invention is directed to a terminal that acquires information on plural kinds of raw coffee beans by using a database that holds the information. The database holds attribute information. The attribute information includes, in association with each other, at least (i) identification information uniquely identifying each of the plural kind of raw coffee beans, (ii) control information indicating a roasting method of the kind by a roasting machine possessed by a user, and (iii) accompanying information related to production and roasting of the kind, and reading of information from the database being managed by a server. In addition, the terminal includes a reading device that reads optically, magnetically, or by a wireless communication, an information code into which one of identification information of a given kind among the plural kind of raw coffee beans and address information of a server storing attribute information of the given kind is converted, the information code being assigned to a delivered kind of raw coffee beans. Further, the terminal includes a processing circuit that generates a request of the attribute information of the given kind based on the information code read, a communication circuit that transmits the request to the server, receives the attribute information of the given kind from the server, and transmits the control information included in the attribute information to a roasting machine, and an output device that outputs the accompanying information.

The user can obtain, as a set, raw coffee beans, and information code for obtaining control information of a roasting machine set according to the kind of raw coffee beans and accompanying information such as a production place and a producer of the kind. Therefore, the user can roast the raw coffee beans at a roasting temperature suitable for the kind and obtain a feeling of being directly connected to the producer via the accompanying information, and can have new experience of eating.

In addition, the user can roast the raw coffee beans at the roasting temperature suitable for the kind of raw coffee beans by receiving the control information of the roasting machine set according to the kind and transmitting the control information to the roasting machine, for example, via the information code attached to the packaging container of the raw coffee beans.

The terminal according to the third invention may have a configuration in which the communication circuit according to the second invention transmits the control information to the roasting machine, the control information including (i) a temperature profile showing a relation between a roasting time and a roasting temperature in the roasting machine and (ii) a rotation number profile showing a relation between the roasting time and a rotation number of a fan of the roasting machine.

The terminal according to the fourth invention may have a configuration in which the information code in the second or third invention is generated by conversion of the identification information of the given kind, the processing circuit converts the information code into the identification information of the given kind, and the communication circuit transmits the identification information of the given kind converted by the processing circuit together with the request.

The terminal according to the fifth invention may further include a storage device storing the attribute information received by the communication circuit in the fourth invention from the server.

The terminal according to the sixth invention may have a configuration in which when the storage device in the fifth invention accumulates attribute information on each of two or more different kinds of raw coffee beans, the processing circuit specifies attribute information of the given kind based on the identification information converted from the information code of the given kind, and the communication circuit transmits, to the roasting machine, the control information included in the attribute information specified.

This makes it possible to transmit, to the roasting machine, the control information according to the kind by reading the information code attached to the packaging container or the like of the raw coffee beans even in a case where a plurality of pieces of control information are saved in the terminal. Therefore, even in a case where a plurality of kinds of raw coffee beans are purchased and control information of the respective beans are collectively saved in the terminal, a correspondence relation between the bean and the control information need not be memorized, which improves the convenience.

The terminal according to the seventh invention may have a configuration in which when the storage device in the fifth invention accumulates attribute information on each of two or more different kinds of raw coffee beans, the attribute information is provided with a time stamp indicating a time when the attribute information is obtained, and the processing circuit transmits, to the roasting machine, the control information included in the attribute information to which the latest time stamp is provided.

The terminal according to the eighth invention may have a configuration in which in a case where attribute information having identification information equal to the identification information converted from the information code is not stored in the storage device, the processing circuit in the fifth invention transmits the identification information of the given raw coffee bean converted by the processing circuit together with the request.

The terminal according to the ninth invention may have a configuration in which in a case where the attribute information having identification information equal to the identification information converted from the information code is stored in the storage device, the processing circuit in the eighth invention outputs, from the output device, information in which the attribute information of the given raw coffee bean exists.

The terminal according to the tenth invention may have a configuration in which the output device of the ninth invention is a display panel, and the output device further outputs a display for selecting whether to update the attribute information of the given raw coffee bean.

The terminal according to the eleventh invention may have a configuration in which the output device in any of the second to tenth inventions is a display panel, and the display panel visually outputs the accompanying information.

The terminal according to the twelfth invention may have a configuration in which the output device in any of the second to eighth inventions is a speaker, and the speaker outputs the accompanying information by voice.

The terminal according to the thirteenth invention may have a configuration in which the communication circuit in any of the second to twelfth inventions receives, from the database, the attribute information further including access information for accessing a server that summarizes information on the given raw coffee bean, and accesses the server based on the access information.

The terminal according to the fourteenth invention further includes, in the third invention, an input interface device that accepts user's instructions, and the attribute information of the given raw coffee bean includes a plurality of pairs of a temperature profile and a plurality of rotation number profiles, which are different from each other. In addition, a configuration may be adopted in which the input interface device accepts user's selection about a pair of a temperature profile and a rotation number profile and the communication circuit transmits, to the roasting machine, the control information including the selected pair of a temperature profile and a rotation number profile.

This enables the terminal to collectively receive a plurality of pieces of control information, for example, control information in which basic control information is changed according to preference, such as dark roast or light roast, and transmit, for example, one piece of control information among the plurality of pieces of control information to the roasting machine. Therefore, it is possible to improve user's convenience and feeling of satisfaction.

The terminal according to the fifteenth invention may have a configuration in which the attribute information of the given raw coffee bean in the fourteenth invention further holds priority information indicating a degree of recommendation of each of the plurality of pairs of a temperature profile and a rotation number profile, and the output device outputs, based on the priority information, information indicating at least the most recommended pair of a temperature profile and a plurality of rotation number profiles.

This enables the terminal to display which control information is recommended for the raw coffee bean among a plurality of pieces of control information, for example, control information in which basic control information is partially changed according to preference, such as dark roast or light roast. Therefore, user's convenience can be further improved.

The terminal according to the sixteenth invention may have a configuration in which the accompanying information related to production and roasting of each raw coffee bean in any of the second to fifteenth inventions includes at least one of a production country, a production place, a producer, and a cultivation environment of each raw coffee bean, a preparer of the control information, and information on comments of the preparer.

The user can learn the information on the producer and the preparer (for example, a roaster) of control information, can obtain a feeling of being directly connected to the producer or the roaster, and can have new experience of eating.

The terminal according to the seventeenth invention may have a configuration in which in the second or third invention, the information code is generated by conversion of address information of a server that stores the attribute information of the given raw coffee bean, the processing circuit converts the information code into the address information, and the communication circuit accesses the server according to the address information converted by the processing circuit and transmits the request.

The user, for example, accesses the server after transmitting the control information to the roasting machine and can easily transmit evaluations, comments, and the like on the raw coffee bean and control information to the server. Thereby, a feeling of satisfaction of a user through a work of roasting the raw coffee beans is improved.

The terminal according to the eighteenth invention may further include a storage device storing the attribute information received by the communication circuit in the seventeenth invention from the server.

### INDUSTRIAL APPLICABILITY

The present invention can be applied to a system having a roasting machine in which a roasting profile is set by using a communication function and a terminal having a function of transmitting the roasting profile to the roasting machine.

### REFERENCE MARKS IN THE DRAWINGS

- 1:: raw coffee bean distribution system
- 10:: information provision system
- 100:: database (DB) server
- 101:: signal processing circuit (CPU)
- 102:: communication circuit
- 103:: memory
- 104:: communication bus
- 150:: shipping server
- 200:: terminal
- 201:: signal processing circuit (CPU)
- 202:: wireless communication circuit
- 203:: input interface (I/F) device
- 204:: memory
- 205:: image processing circuit
- 206:: display
- 207:: camera module
- 208:: storage
- 209:: speaker
- 210:: communication bus
- 300:: roasting machine
- 301:: microcomputer
- 302:: wireless communication circuit
- 303:: memory
- 304:: fan motor
- 305:: heater
- 306:: storage
- 307:: communication bus

## Claims

1. An information provision method of providing information on plural kinds of raw coffee beans by using a database that holds the information,
the database including attribute information, the attribute information including, in association with each other, at least (i) identification information uniquely identifying each of the plural kinds of raw coffee beans, (ii) control information indicating a roasting method of the kind by a roasting machine possessed by a user, and (iii) accompanying information related to production of the kind, the information provision method comprising the steps of:
causing a terminal of the user to read an information code into which one of identification information of a given kind among the plural kinds of raw coffee beans and address information of a server storing attribute information of the given kind is converted;
extracting the identification information of the given kind or the address information from the information code;
causing the terminal to transmit a request of the attribute information of the given kind based on the identification information of the given kind or the address information extracted;
extracting the attribute information of the given kind from the database in response to reception of the request;
transmitting, to the terminal, the attribute information extracted;
causing the terminal to receive the attribute information transmitted;
causing the roasting machine to transmit the control information included in the attribute information; and
causing an output device of the terminal to output the accompanying information.

2. A terminal that acquires information on plural kinds of raw coffee beans by using a database that holds the information,
the database holding attribute information, the attribute information including, in association with each other, at least (i) identification information uniquely identifying each of the plural kinds of raw coffee beans, (ii) control information indicating a roasting method of the kind by a roasting machine possessed by a user, and (iii) accompanying information related to production and roasting of the kind, and reading of information from the database being managed by a server, the terminal comprising:
a reading device that reads optically, magnetically, or by a wireless communication, an information code into which one of identification information of a given kind among the plural kind of raw coffee beans and address information of a server storing attribute information of the given kind is converted, the information code being assigned to a delivered kind of raw coffee beans;
a processing circuit that generates a request of the attribute information of the given kind based on the information code read;
a communication circuit that transmits the request to the server,
receives the attribute information of the given kind from the server, and transmits the control information included in the attribute information to a roasting machine; and
an output device that outputs the accompanying information.

3. The terminal according to claim 2, wherein the communication circuit transmits the control information to the roasting machine, the control information including (i) a temperature profile showing a relation between a roasting time and a roasting temperature in the roasting machine and (ii) a rotation number profile showing a relation between the roasting time and a rotation number of a fan of the roasting machine.

4. The terminal according to any one of claims 2 and 3, wherein
the information code is generated by conversion of the identification information of the given kind,
the processing circuit converts the information code into identification information of the given kind, and
the communication circuit transmits the identification information of the given kind converted by the processing circuit together with the request.

5. The terminal according to claim 4, further comprising a storage device storing the attribute information received by the communication circuit from the server.

6. The terminal according to claim 5, wherein when the storage device accumulates the attribute information in relation to each of two or more different kinds of raw coffee beans,
the processing circuit specifies the attribute information of the given kind based on the identification information converted from the information code of the given kind, and
the communication circuit transmits, to the roasting machine, the control information included in the attribute information specified.

7. The terminal according to claim 5, wherein when the storage device accumulates the attribute information in relation to each of two or more different kinds of raw coffee beans,
the attribute information is provided with a time stamp indicating a time when the attribute information is obtained, and
the processing circuit transmits the control information included in the attribute information provided with a latest time stamp to the roasting machine.

8. The terminal according to claim 5, wherein in a case where attribute information having identification information equal to the identification information converted from the information code is not stored in the storage device, the processing circuit transmits the identification information of the given kind converted by the processing circuit together with the request.

9. The terminal according to claim 8, wherein in a case where the attribute information having identification information equal to the identification information converted from the information code is stored in the storage device, the processing circuit outputs, from the output device, information in which the attribute information of the given kind exists.

10. The terminal according to claim 9, wherein
the output device is a display panel, and
the output device further outputs a display for selecting whether to update the attribute information of the given kind.

11. The terminal according to any one of claims 2 to 10, wherein
the output device is a display panel, and
the display panel visually outputs the accompanying information.

12. The terminal according to any one of claims 2 to 8, wherein
the output device is a speaker, and
the speaker outputs the accompanying information by voice.

13. The terminal according to any one of claims 2 to 12, wherein the communication circuit receives, from the database, the attribute information further including access information for accessing a server that summarizes information on the given kind, and accesses the server based on the access information.

14. The terminal according to claim 3, further comprising an input interface device that accepts an instruction of the user, wherein
the attribute information of the given kind includes a plurality of pairs of a temperature profile and a plurality of rotation number profiles different from each other,
the input interface device accepts selection of the user about a pair of a temperature profile and a rotation number profile, and
the communication circuit transmits, to the roasting machine, the control information including the pair of a temperature profile and a rotation number profile selected.

15. The terminal according to claim 14, wherein the attribute information of the given kind further holds priority information indicating a degree of recommendation of each of the plurality of pairs of a temperature profile and a rotation number profile, and the output device outputs, based on the priority information, information indicating at least a most recommended pair of a temperature profile and a plurality of rotation number profiles.

16. The terminal according to any one of claims 2 to 15, wherein the accompanying information related to production and roasting of each of the plural kinds of raw coffee beans includes at least one of a production country, a production place, a producer, and a cultivation environment of the kind, a preparer of the control information, and information on comments of the preparer.

17. The terminal according to any one of claims 2 and 3, wherein
the information code is generated by conversion of the address information of a server storing the attribute information of the given,
the processing circuit converts the information code into the address information, and
the communication circuit accesses the server according to the address information converted by the processing circuit and transmits the request.

18. The terminal according to claim 17, further comprising a storage device storing the attribute information received by the communication circuit from the server.
